(19) Europäisches Patentamt
European Patent Office
Office européen des brevets

(11) Veröffentlichungsnummer : **0 175 068**
**B1**

(12) # EUROPÄISCHE PATENTSCHRIFT

(45) Veröffentlichungstag der Patentschrift : **03.01.90**

(51) Int. Cl.$^5$ : **C 03 B 37/018**

(21) Anmeldenummer : **85107856.8**

(22) Anmeldetag : **25.06.85**

(54) **Verfahren zur Herstellung eines Aerosolstromes.**

(30) Priorität : **21.09.84 DE 3434674**

(43) Veröffentlichungstag der Anmeldung : **26.03.86 Patentblatt 86/13**

(45) Bekanntmachung des Hinweises auf die Patenterteilung : **03.01.90 Patentblatt 90/01**

(84) Benannte Vertragsstaaten : **AT BE CH DE FR GB IT LI NL SE**

(56) Entgegenhaltungen :
**EP-A- 0 082 305**
**EP-A- 0 116 342**
**EP-A- 0 134 507**
**EP-A- 0 147 029**
**DE-A- 3 206 177**

(73) Patentinhaber : **Licentia Patent-Verwaltungs-GmbH**
**Theodor-Stern-Kai 1**
**D-6000 Frankfurt/Main 70 (DE)**

(72) Erfinder : **Eisbrenner, Dietrich**
**Eberhardtstrasse 70**
**D-7900 Ulm (DE)**
Erfinder : **Merk, Hans**
**Bruckackerstrasse 17**
**D-7900 Ulm-Gögglingen (DE)**

(74) Vertreter : **Schulze, Harald Rudolf, Dipl.-Ing. et al**
**Licentia Patent-Verwaltungs-GmbH Theodor-Stern-Kai 1**
**D-6000 Frankfurt/Main 70 (DE)**

**EP 0 175 068 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zur Herstellung eines Aerosolstromes nach dem Oberbegriff des Patentanspruchs 1.

Ein derartiges Verfahren ist bekannt aus der EP-A1-0 116 342. Dort wird ein Verfahren zur Herstellung einer Vorform für Lichtwellenleiter beschrieben, bei welchem bei niedrigen Temperaturen, z. B. 20 °C, glasbildende Cloride, z. B. $SiCl_4$ und/oder $GeCl_4$, mit Wasserdampf in einer flammenfreien Reaktion zu einer glasbildenden Schicht, z. B. $SiO_2$-soot, umgesetzt werden. Diese glasbildende Schicht wird auf einem geeigneten Trägerkörper, z. B. einem Graphitrohr, niedergeschlagen, so daß eine Vorform entsteht, aus der ein Lichtwellenleiter gezogen werden kann. Eine Dotierung von $SiO_2$ mit Germanium bewirkt eine Erhöhung des optischen Brechungsindexes von $SiO_2$.

Aus der US-A-4 062 665 ist ein Verfahren zur Herstellung einer Vorform bekannt, bei welchem auf der Stirnfläche eines rotierenden zylinderförmigen Körpers kleine undotierte und/oder dotierte $SiO_2$-Teilchen abgeschieden werden. Die Erzeugung und Abscheidung der $SiO_2$-Teilchen erfolgt mit Hilfe eines Hochtemperaturbrenners, der eine Temperatur von mindestens 1 200 °C erzeugt. Es wird ein sogenannter Glasruß (« soot ») abgeschieden, der in einem weiteren Verfahrensschritt gesintert wird, so daß eine Vorform entsteht, aus welcher ein Lichtwellenleiter gezogen werden kann.

Ein solches Verfahren wird auch VAD-Verfahren (« vertical axial deposition ») genannt.

In der nichtvorveröffentlichen EP-A-0 134 507 die unter Artikel 54(3) EPÜ fällt, wird ein Verfahren beschrieben, das insbesondere geeignet ist zur Herstellung von sogenannten Vorformen für Lichtwellenleiter aus Quarzglas. Dazu wird durch eine chemische Umsetzung von gasförmigem Siliciumtetrachlorid ($SiCl_4$) und Wasserdampf ($H_2O$) in einem Reaktor bei 500 °C bis 1 000 °C ein Siliciumdioxid ($SiO_2$)-haltiger Aerosolstrom erzeugt. In dem Aerosolstrom befindet sich ein stabförmiger Trägerkörper, auf welchem die $SiO_2$-Teilchen abeschieden werden. Dabei ist es erforderlich, Schichten mit unterschiedlichen optischen Brechungsindizes zu erzeugen. Dieses geschieht durch Dotierung der $SiO_2$-Teilchen.

Die Erzeugung der $SiO_2$-Teilchen erfolgt in einem Reaktor in einem Temperaturbereich von 500 °C bis 1 000 °C durch eine Hydrolysereaktion gemäß der Formel

$$SiCl_4 + 2\ H_2O \rightarrow SiO_2 + 4\ HCl \qquad (1)$$

Eine Dotierung derartig hergestellter $SiO_2$-Teilchen ist lediglich möglich mit Dotierstoffen, die bei den erwähnten Reaktionsbedingungen in die Quarzmatrix einbaubar sind. Ein derartiger Dotierstoff ist beispielsweise Germaniumoxid ($GeO_2$), das den Brechungsindex von $SiO_2$ erhöht. Diese Dotierung erfolgt mit Hilfe einer Hydrolysereaktion gemäß der Formel

$$GeCl_4 + 2\ H_2O \rightarrow GeO_2 + 4\ HCl \qquad (2)$$

die analog zu Formel (1) abläuft.

Für einige optische Brechzahlprofile eines Lichtwellenleiters ist es jedoch erforderlich, den Brechungsindex von $SiO_2$ durch Dotierung zu erniedrigen.

Der Erfindung liegt daher die Aufgabe zugrunde, ein gattungsgemäßes Verfahren dahingehend weiterzubilden, daß bei einem $SiO_2$-haltigen Aerosolstrom eine Dotierung der darin enthaltenen $SiO_2$-Teilchen möglich wird, die bei $SiO_2$ eine Erniedrigung des optischen Brechungsindexes bewirkt.

Diese Aufgabe wird gelöst durch die im kennzeichnenden Teil des Patentanspruchs 1 angegebenen Merkmale.

Ein erster Vorteil der Erfindung besteht darin, daß bei Verwendung von $CF_2\ Cl_2$ das entstehende Fluor in die $SiO_2$-Teilchen eingebaut wird. Eine unsicher beherrschbare oberflächliche Adsorption wird vermieden.

Ein zweiter Vorteil besteht darin, daß eine hohe Fluorkonzentration im Siliciumdioxid erreicht wird, so daß eine starke Erniedrigung des optischen Brechungsindexes ermöglicht wird.

Die Erfindung wird im folgenden anhand eines Ausführungsbeispiels näher erläutert.

In einer Versuchsreihe werden $SiO_2$-Teilchen gemäß Formel (1) hergestellt. Diese $SiO_2$-Teilchen besitzen einen Durchmesser von ungefähr 0,3 µm und werden in der Fachliteratur als Glasruß oder mit dem englischen Ausdruck « soot » bezeichnet. Dabei werden dem dampfförmigen Siliciumtetrachlorid ($SiCl_4$) verschiedene fluorhaltige Gase und/oder Dämpfe in bestimmten Verhältnissen beigemengt und der entstandene Glasruß (« soot ») auf seinen Fluorgehalt untersucht. Das Ergebnis ist in der folgenden Tabelle dargestellt :

(Siehe Tabelle Seite 3 f.)

| Fluor-Verbindung | F/Si-Verhältnis in den Ausgangsgasen in mol % | F/Si-Verhältnis in der Probe in mol % | Art der Probe |
|---|---|---|---|
| $CF_2Cl_2$ | 8,2 | 1,8 | soot |
| $CF_2Cl_2$ | 8,2 | 1,0 | soot gesintert (1500°C) |
| $CF_2Cl_2$ | 8,2 | 1,0 | soot gesintert (1580°C) |
| $CF_4$ | 19,6 | 0,03 | soot |
| $SF_6$ | 65,7 | 0,03 | soot |

Von den verwendeten Gasen und/oder Dämpfen zeigt lediglich $CF_2Cl_2$ einen Dotierungseffekt in einer erwünschten Größenordnung. $CF_4$ und $SF_6$ ergeben eine vernachlässigbare Fluordotierung, wohl deshalb, weil sich diese Gase bei einer Temperatur von 700 °C noch nicht nennenswert zersetzen. Ein wichtiges Ergebnis ist auch, daß der Fluorgehalt (nach einer Dotierung mit $CF_2Cl_2$ und nach einem Sintervorgang) zum großen Teil erhalten bleibt. Dies kann als Hinweis aufgefaßt werden, daß tatsächlich ein Einbau des Fluors in die $SiO_2$-Partikel erfolgt ist und nicht nur eine oberflächliche Adsorption vorliegt. Mit der angegebenen Fluordotierung im Bereich von 1,0 mol % bis 1,8 mol % ist bei $SiO_2$ eine Erniedrigung des optischen Brechungsindexes von 0,35 % bis 0,57 % möglich.

**Patentanspruch**

Verfahren zur Herstellung eines Aerosolstromes, bei dem aus einem Gas- und/oder Dampfgemisch in einem Reaktor durch eine flammenfreie chemische Umsetzung von dampfförmigem Siliciumtetrachlorid mit Wasserdampf ein siliciumdioxidhaltiges Aerosol erzeugt wird, dadurch gekennzeichnet, daß durch Zugabe von einem dampfförmigem Fluor-haltigen halogenierten Kohlenwasserstoff, der im wesentlichen durch die chemische Formel $CF_2Cl_2$ dargestellt wird, zu dem Gas- und/oder Dampfgemisch ein Fluordotiertes Siliciumdioxid erzeugt wird mit einem gegenüber reinem Siliciumdioxid erniedrigtem optischen Brechungsindex, und daß der Siliciumdioxid-haltige Aerosolstrom durch einen im wesentlichen aerosolfreien gas- und/oder Dampfstrom geführt wird.

**Claim**

Method for the production of an aerosol stream, in which an aerosol containing silicon dioxide is produced from a mixture of gas and/or vapour in a reactor by a flame-free chemical reaction of vaporous silicon tetrachloride with water vapour, characterised thereby, that a fluorine-doped silicon dioxide with an optical refractive index, which is reduced by comparison with pure silicon dioxide, is produced by addition of a vaporous halogenated hydrocarbon, which contains fluorine and is substantially represented by the chemical formula $CF_2Cl_2$, to the mixture of gas and/or vapour and that the aerosol stream containing silicon dioxide is conducted through a stream of gas and/or vapour substantially free of aerosol.

**Revendication**

Procédé pour la fabrication d'un courant d'aérosol, dans lequel on produit un aérosol contenant du dioxyde de silicium dans un réacteur à partir d'un mélange de gaz et/ou de vapeurs par une réaction chimique sans flamme de tétrachlorure de silicium à l'état vapeur avec de la vapeur d'eau, caractérisé en ce que l'on produit un dioxyde de silicium dopé au fluor ayant un indice de réfraction optique abaissé par rapport au dioxyde de silicium pur par addition d'un hydrocarbure halogéné fluoré à l'état vapeur qui est essentiellement représenté par la formule chimique $CF_2Cl_2$, et en ce que le courant d'aérosol contenant du dioxyde de silicium est envoyé à travers un courant de gaz et/ou de vapeurs essentiellement exempts d'aérosol.